# EUROPEAN PATENT APPLICATION

(11) **EP 4 366 324 A1**
(43) Date of publication of application: **08.05.2024**
(21) Application number: 22832553.6
(22) Date of filing: 31.03.2022
(51) Int. Cl.: H04Q 9/00, G08B 25/00

(54) **MONITORING SYSTEM FOR WORK MACHINE**

(30) Priority: 29.06.2021 JP 2021108008
(71) Applicant: Kubota Corporation, Osaka 556-8601 (JP)
(72) Inventor: MIURA, Keisuke, Sakai-shi, Osaka 590-0823 (JP); IIDA, Yoshihito, Sakai-shi, Osaka 590-0823 (JP); MATSUMOTO, Atsushi, Sakai-shi, Osaka 590-0823 (JP); IKEDA, Ryo, Sakai-shi, Osaka 590-0823 (JP)
(74) Representative: Cabinet Beau de Loménie
(86) International application number: PCT/JP2022/016411
(87) International publication number: WO 2023/276392

(57) **Abstract**

A monitoring system of a work machine (101) includes a monitoring device (100) that performs a monitoring on whether or not a work machine is within an area when a first signal is received and cancels the monitoring when a second signal is received. The work machine (101) includes at least: a communication device (45A) that transmits the first signal and the second signal to the monitoring device (100), a first instruction member that is operated to instruct the communication device (45A) to transmit the first signal, and a second instruction member that is operated to instruct the communication device (45A) to transmit the second signal when the monitoring device (199) is monitoring the work machine (101) .

## Description

### TECHNICAL FIELD

The present invention relates to a monitoring system for work machines including, for example, an agricultural machine, a construction machine, and the like.

### BACKGROUND ART

Conventionally, a monitoring system disclosed in Patent Literature 1 is known as a system for monitoring a work machine such as an agricultural machine. The monitoring system according to Patent Literature 1 includes a first communication device and a second communication device. The first communication device is provided in the work machine and is capable of outputting a beacon. The second communication device is installed in a storage place or the like of the work machine, and is capable of receiving a beacon from the first communication device. The second communication device includes a monitoring unit that outputs an alarm to the outside when the beacon cannot be received after changing from a state in which the beacon is being received.

### CITATION LIST

### PATENT LITERATURE

Patent Literature 1: JP 6401002 B2 (claim 5, etc.)

### SUMMARY OF INVENTION

In the system according to Patent Literature 1, during monitoring, for example, when the work machine moves from a storage place and the monitoring unit receives that the beacon cannot be received, an alarm is transmitted to the outside. As a result, theft prevention of the work machine can be expected. However, there is also a case where the work machine is intentionally moved from the storage place without starting the prime mover instead of being stolen. In this case, when the work machine is monitored, a warning may be transmitted even when the work machine is not stolen, and it is likely to be erroneously determined that the work machine is stolen. Therefore, there is a high possibility that the user may confuse it with the occurrence of theft, and there is also a high possibility that if the user gets used to the warning, the user may overlook the actual theft, lowering the security.

In view of the above problems, an object of the present invention is to provide a work machine monitoring system capable of arbitrarily starting and/or canceling monitoring of a work machine on the work machine side.

### SOLUTION TO PROBLEM

The technical means of the present invention for solving this technical problem is characterized in the following respects. A work machine monitoring system includes a monitoring device that performs a monitoring on whether or not a work machine is within an area when a first signal is received and cancels the monitoring when a second signal is received, wherein the work machine includes at least: a communication device that transmits the first signal and the second signal to the monitoring device, a first instruction member that is operated to instruct the communication device to transmit the first signal, and a second instruction member that is operated to instruct the communication device to transmit the second signal when the monitoring device is monitoring the work machine.

The work machine further includes a prime mover, and the communication device outputs the first signal when the first instruction member is operated during a stop of the prime mover.

The work machine further includes: a prime mover, and a prime mover operation member that performs an operation of starting or stopping the prime mover, and the communication device outputs the first signal when the first instruction member is operated during the operation of stopping performed by the prime mover operation member.

The work machine further includes: a working device driven by the prime mover, and a working device operation member for operating the working device during a driving of the prime mover, and the working device operation member, as the second instruction member, instructs the communication device to transmit the second signal when the working device operation member is operated during a stop of the prime mover.

The work machine further includes: a working device driven by the prime mover, a working device operation member for operating the working device during a driving of the prime mover, and a lock operation member that is operated so that the working device is not operated by operating the working device operation member, and the lock operation member, as the second instruction member, instructs the communication device to transmit the second signal when the lock operation member is operated during a stop of the prime mover.

The work machine further includes: a traveling device driven by the prime mover, and a shift operation member for shifting the traveling device, and the shift operation member, as the second instruction member, instructs the communication device to transmit the second signal when the shift operation member is operated during a stop of the prime mover.

The work machine further includes: a working device, and a PTO operation member for changing a power to a PTO shaft which transmits the power to the working device, and the PTO operation member, as the second instruction member, instructs the communication device to transmit the second signal when the PTO operation member is operated during a stop of the prime mover.

### ADVANTAGEOUS EFFECTS OF INVENTION

According to the present invention, it is possible to arbitrarily start and/or cancel monitoring of a work machine on the work machine side.

### BRIEF DESCRIPTION OF DRAWINGS

Fig. 1 is an overall view showing a work machine monitoring system according to a first embodiment.
Fig. 2 is a functional block diagram of an electronic device included in the work machine.
Fig. 3 is a perspective view of a lifting device included in the work machine.
Fig. 4 is a plan view showing a driving seat and a periphery of the driving seat of a vehicle body included in the work machine.
Fig. 5 is a side view showing an armrest and an operation member of the driving seat of the vehicle body included in the work machine.
Fig. 6 is a diagram showing an example of a setting screen displayed on a display unit of a computer.
Fig. 7 is a diagram showing an example of area information set by an area setting unit of a monitoring device.
Fig. 8 is a diagram showing an example of an area set corresponding to the work machine and states in which the work machine is located inside or outside the area respectively.
Fig. 9 is a view showing a state in which the work machine is loaded on a truck that can carry a vehicle.
Fig. 10A is a flowchart showing a flow of start of monitoring, cancellation of monitoring, and notification due to monitoring of a work machine 101 by the work machine monitoring system.
Fig. 10B is a flowchart showing a flow of start of monitoring, cancellation of monitoring, and notification due to monitoring of the work machine 101 by a work machine monitoring system of another different embodiment.
Fig. 11 is a diagram showing an example of an area set corresponding to the work machine and states in which the work machine is located inside or outside the area respectively.
Fig. 12 is a perspective view showing a lower portion of a driving seat of a vehicle body and a hydraulic lock lever included in a work machine of a second embodiment.
Fig. 13 is a side view showing an armrest and a shift lever at a driving seat of a vehicle body included in a work machine of a third embodiment.
Fig. 14 is a view showing an operation of a PTO switch included in a work machine of a fourth embodiment.
Fig. 15 is a diagram showing a relation between area setting and area deletion.
Fig. 16 is an overall view of a work machine.

### DESCRIPTION OF EMBODIMENTS

Hereinafter, embodiments of the present invention will be described with reference to the drawings.

### [First embodiment]

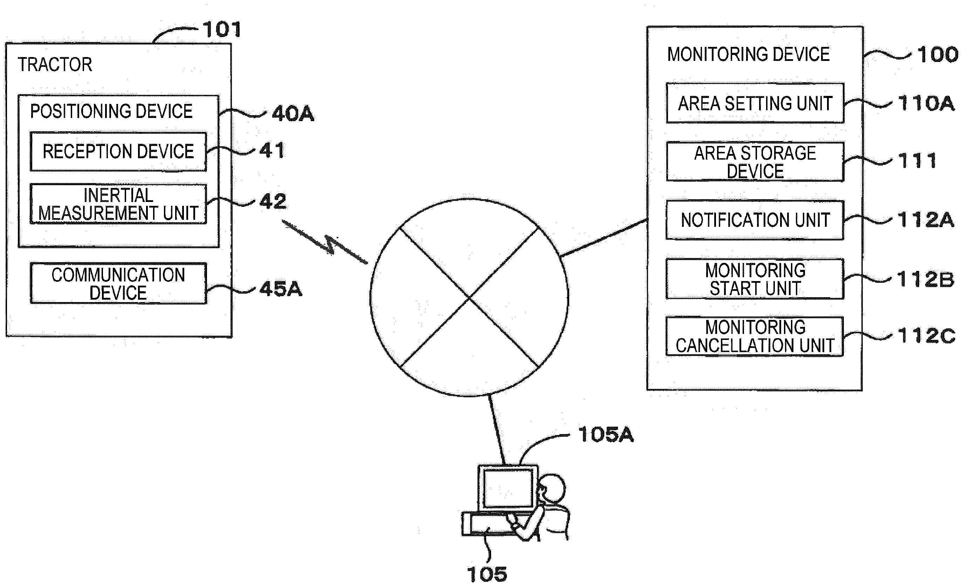

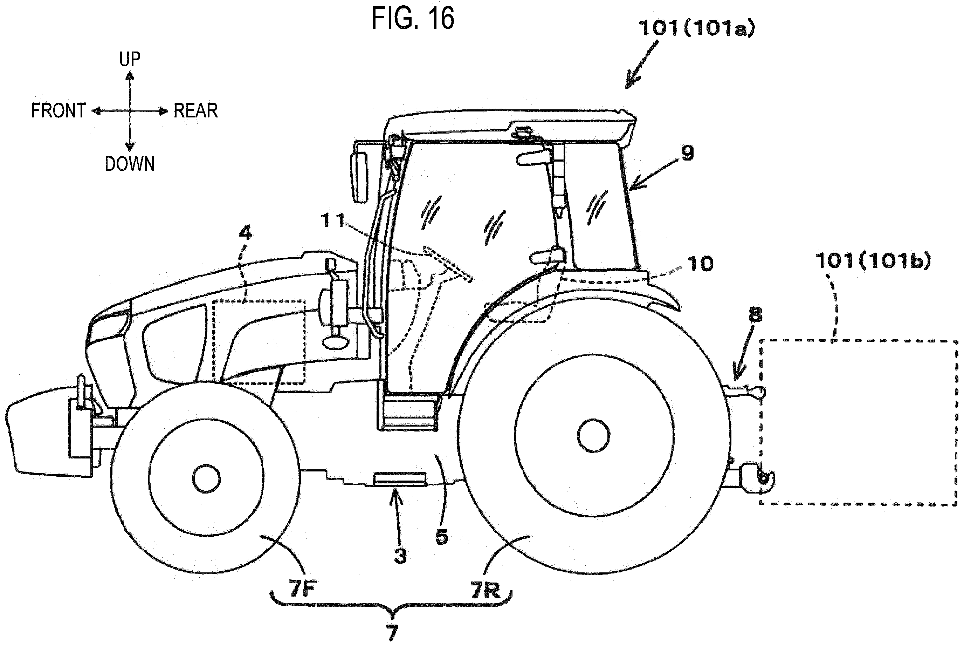

Fig. 1 shows a work machine monitoring system. The monitoring system includes a monitoring device 100. The monitoring device 100 is a device that monitors a work machine 101. The work machine 101 includes an agricultural machine 101a such as a tractor, a combined harvester, or a rice transplanter, and an implement 101b which can be connected to the agricultural machine 101a (see Fig. 16). The monitoring device 100 is a stationary computer such as a server, a portable computer such as a smartphone, a tablet, or a notebook computer, or the like. In this embodiment, the description will proceed assuming that the monitoring device 100 is a server. The work machine 101 may be a construction machine or the like instead of the agricultural machine 101a.

### <Work machine>

Fig. 16 is a side view showing a tractor as one of the agricultural machine 101a and the implement 101b which can be attached to the tractor. Hereinafter, a front side of a driver seated on a driving seat 10 of the tractor is referred to as front, a rear side of the driver is referred to as rear, a left side of the driver is referred to as left, and a right side of the driver is referred to as right. In addition, a horizontal direction which is orthogonal to a front-rear direction of the tractor is referred to as vehicle body width direction.

As shown in Fig. 16, the tractor includes a vehicle body 3, a prime mover 4, and a transmission 5. The vehicle body 3 has a traveling device 7 and can travel. The traveling device 7 has a front wheel 7F and a rear wheel 7R. The front wheel 7F may be a tire type or a crawler type. The rear wheel 7R may also be a tire type or a crawler type. The prime mover 4 is a diesel engine, an electric motor, or the like, and is constituted of a diesel engine in this embodiment. The transmission 5 is capable of switching the propulsive force of the traveling device 7 by shifting, and is capable of switching the traveling device 7 between forward travel and reverse travel. The driving seat 10 is provided at a rear portion of the vehicle body 3. A steering wheel 11 is provided in front of the driving seat 10.

Further, a connecting unit configured with a 3-point link mechanism or the like is provided at a rear portion of the vehicle body 3. The connecting unit is a lifting device 8 that allows the working device (implement) 101b to be detached and allows the working device (implement) 101b to travel. By connecting the implement 101b to the lifting device 8, the implement 101b can be towed by the vehicle body 3. Note that the connecting unit may be a traction device that does not raise or lower the implement 101b. The implement 101b may be a tilling device for tilling, a ridging device for ridging, a planting device for planting crops, a manure spreading device for spreading manure, an agrochemical spreading device for spreading agrochemicals, a harvesting device for harvesting, a reaping device for reaping grass or the like, a spreading device for spreading grass or the like, a grass collecting device for collecting grass or the like, a shaping device for shaping grass or the like, etc.

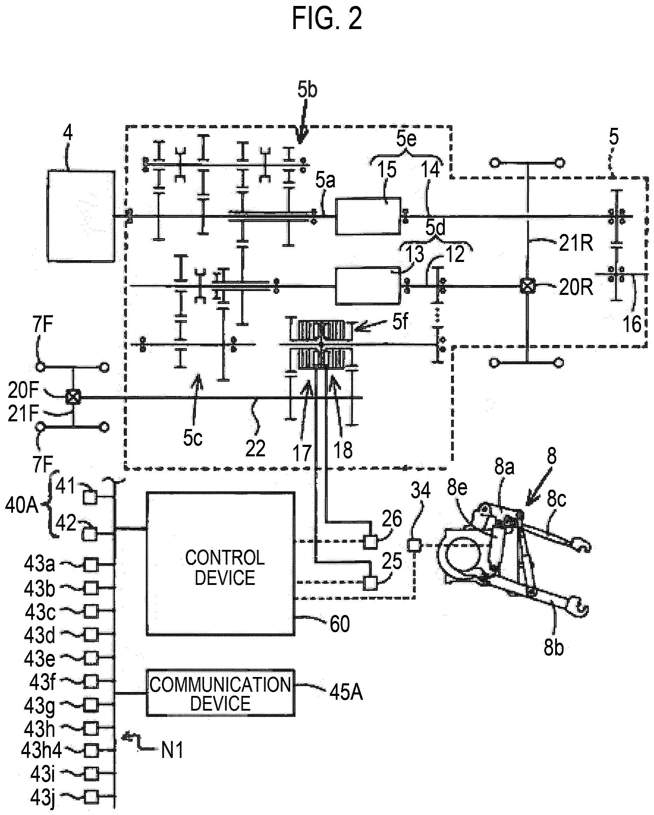

As shown in Fig. 2, the transmission 5 includes a main shaft (propeller shaft) 5a, a main transmission unit 5b, an auxiliary transmission unit 5c, a shuttle unit 5d, a PTO power transmission unit 5e, and a front transmission unit 5f. The propeller shaft 5a is rotatably supported by a housing case (transmission case) of the transmission 5, and power from a crankshaft of the prime mover 4 is transmitted to the propeller shaft 5a. The main transmission unit 5b includes a plurality of gears and a shifter for changing the connection of the gears. The main transmission unit 5b changes the connection (meshing) of the plurality of gears with the shifter as appropriate to change the rotation input from the propeller shaft 5a and output the changed rotation (shift) .

Like the main transmission unit 5b, the auxiliary transmission unit 5c includes a plurality of gears and a shifter for changing the connection of the gears. The auxiliary transmission unit 5c changes the connection (meshing) of the plurality of gears with the shifter as appropriate to change the rotation input from the main transmission unit 5b and output the changed rotation (shift). The shuttle unit 5d has a shuttle shaft 12 and a forward and reverse travel switching unit 13. Power output from the auxiliary transmission unit 5c is transmitted to the shuttle shaft 12 via the gears and the like. The forward and reverse travel switching unit 13 is constituted of, for example, a hydraulic clutch and the like, and switches the rotation directions of the shuttle shaft 12, i.e., forward travel and reverse travel of the tractor, by engaging or disengaging the hydraulic clutch. The shuttle shaft 12 is connected to a rear wheel differential device 20R. The rear wheel differential device 20R rotatably supports a rear axle 21R to which the rear wheel 7R is attached.

The PTO power transmission unit 5e includes a PTO propeller shaft 14 and a PTO clutch 15. The PTO propeller shaft 14 is rotatably supported and is capable of transmitting power from the propeller shaft 5a. The PTO propeller shaft 14 is connected to a PTO shaft 16 via the gears and the like. The PTO clutch 15 is constituted of, for example, a hydraulic clutch and the like, and is switched between a state in which the power of the propeller shaft 5a is transmitted to the PTO propeller shaft 14 and a state in which the power of the propeller shaft 5a is not transmitted to the PTO propeller shaft 14 by engaging or disengaging the hydraulic clutch.

The front transmission unit 5f includes a first clutch 17 and a second clutch 18. The first clutch 17 and the second clutch 18 are capable of transmitting power from the propeller shaft 5a, and for example, the power of the shuttle 12 is transmitted via the gears and a transmission shaft. Power from the first clutch 17 and the second clutch 18 can be transmitted to a front axle 21F via a front transmission shaft 22. Specifically, the front transmission shaft 22 is connected to a front wheel differential device 20F, and the front wheel differential device 20F rotatably supports the front axle 21F to which the front wheel 7F is attached.

The first clutch 17 and the second clutch 18 are constituted of hydraulic clutches and the like. An oil passage is connected to the first clutch 17, and the oil passage is connected to a first working valve 25 to which hydraulic oil discharged from a hydraulic pump is supplied. The first clutch 17 is switched between a connected state and a disconnected state in accordance with an opening degree of the first working valve 25. An oil passage is connected to the second clutch 18, and the oil passage is connected to a second working valve 26. The second clutch 18 is switched between a connected state and a disconnected state in accordance with an opening degree of the second working valve 26. Each of the first working valve 25 and the second working valve 26 is, for example, a two-position switching valve with an electromagnetic valve, and is switched to the connected state or the disconnected state by exciting or demagnetizing a solenoid of the electromagnetic valve.

When the first clutch 17 is in the disconnected state and the second clutch 18 is in the connected state, the power of the shuttle shaft 12 is transmitted to the front wheel 7F through the second clutch 18. Thus, four wheel drive (4WD) in which the front wheel 7F and the rear wheel 7R are driven by power is performed, and the rotation speeds of the front wheel 7F and the rear wheel 7R become substantially the same (4WD constant speed state). On the other hand, when the first clutch 17 is in the connected state and the second clutch 18 is in the disconnected state, four wheel drive is performed and the rotation speed of the front wheel 7F becomes higher than the rotation speed of the rear wheel 7R (4WD acceleration state). In addition, when the first clutch 17 and the second clutch 18 are in the disconnected state, the power of the shuttle shaft 12 is not transmitted to the front wheel 7F, and thus, two wheel drive (2WD) in which the rear wheel 7R is driven by power is performed.

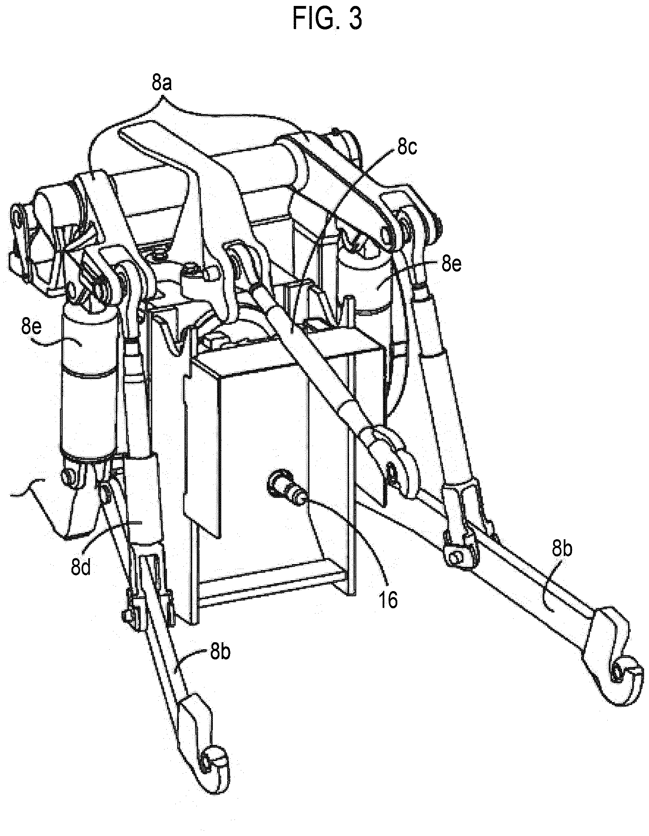

As shown in Figs. 2 and 3, the lifting device 8 includes a lift arm 8a, a lower link 8b, a top link 8c, a lift rod 8d, and a lift cylinder 8e. A front end portion of the lift arm 8a is supported by a rear upper portion of a case (transmission case) that accommodates the transmission 5 in a manner of being capable of swinging upward or downward. The lift arm 8a is swung (raised and lowered) by driving of the lift cylinder 8e. The lift cylinder 8e is constituted of a hydraulic cylinder. The lift cylinder 8e is connected to the hydraulic pump via a control valve 34. The lift cylinder 8e is switched between a connected state and a disconnected state in accordance with an opening degree of the control valve 34. The control valve 34 is, for example, a two-position switching valve with an electromagnetic valve, and is switched to the connected state or the disconnected state by exciting or demagnetizing a solenoid of the electromagnetic valve. When the control valve 34 is switched to the connected state, the lift cylinder 8e is driven (extended or contracted) by the hydraulic pump, and when the control valve 34 is switched to the disconnected state, the drive of the lift cylinder 8e is restricted (locked).

A front end portion of the lower link 8b is supported by a rear lower portion of the transmission 5 in a manner of being capable of swinging upward or downward. A front end portion of the top link 8c is supported by a rear portion of the transmission 5 above the lower link 8b in a manner of being capable of swinging upward or downward. The lift rod 8d connects the lift arm 8a and the lower link 8b. The implement 101b is connected to a rear portion of the lower link 8b and a rear portion of the top link 8c. When the lift cylinder 8e is driven (extended and contracted), the lift arm 8a is raised and lowered, and the lower link 8b connected to the lift arm 8a via the lift rod 8d is raised and lowered. Thus, the implement 101b swings upward or downward (is raised or lowered) with the front portion of the lower link 8b as a fulcrum. When the drive of the lift cylinder 8e is restricted, the raising and lowering of the implement 101b are also locked.

As shown in Fig. 2, the tractor includes a positioning device 40A. The positioning device 40A can detect its own position (positioning information including latitude and longitude) by a satellite positioning system (positioning satellite) such as D-GPS, GPS, GLONASS, BeiDou, Galileo, or Michibiki. That is, the positioning device 40A receives a satellite signal (a position of a positioning satellite, a transmission time, correction information, and the like) transmitted from the positioning satellite and detects a position (for example, latitude and longitude) based on the satellite signal. The positioning device 40A includes a reception device 41 and an inertial measurement unit (IMU) 42. The reception device 41 includes an antenna or the like and receives a satellite signal transmitted from a positioning satellite, and is attached to the vehicle body 3 separately from the inertial measurement unit 42. According to this embodiment, the reception device 41 is attached to a cabin 9 provided in the vehicle body 3. Note that the mounting location of the reception device 41 is not limited to the embodiment.

The inertial measurement unit 42 includes an acceleration sensor that detects acceleration, a gyro sensor that detects angular velocity, and the like. The inertial measurement unit 42 is provided in the vehicle body 3, for example, below the driving seat 10, and the inertial measurement unit 42 can detect a roll angle, a pitch angle, a yaw angle, and the like of the vehicle body 3.

As shown in Fig. 2, the tractor includes a communication device 45A. The communication device 45A is connected to the positioning device 40A, a control device 60, operation members (levers, switches, dials, and the like), and sensors via an in-vehicle communication network N1 to receive an input of an electric signal. The communication device 45A can communicate with an external network (outside) which is different from the in-vehicle communication network N1. The communication device 45A can perform radio communication using, for example, Wi-Fi (Wireless Fidelity, registered trademark) of the communication standard of IEEE802.11 series, Bluetooth (registered trademark) Low Energy (BLE), Low Power, Wide Area (LPWA), Low-Power Wide-Area Network (LPWAN), etc. The communication device 45A can perform radio communication using, for example, a mobile phone communication network or a data communication network, etc. The communication device 45A transmits the vehicle body position (the position of the tractor) detected by the positioning device 40A to the monitoring device 100. The communication device 45A transmits a first signal for monitoring whether or not the work machine 101 is in the area and a second signal for canceling the monitoring to the monitoring device 100.

As shown in Fig. 2, the tractor includes the control device 60. The control device 60 includes a calculation unit (CPU or the like), a storage unit (memory), and the like, and executes a predetermined control based on a program stored in the storage unit. More specifically, the control device 60 controls a traveling system and a working system of the tractor based on an operation signal when an operation member (a lever, a switch, a dial, or the like) installed around the driving seat 10 is operated, detection signals of various sensors mounted on the vehicle body 3, and the like.

When a shuttle lever 43a for switching the forward travel or the backward travel of the vehicle body 3 is operated to the forward travel, the control device 60 switches the forward and reverse travel switching unit 13 to the forward travel to cause the vehicle body 3 to travel forward. When the shuttle lever 43a is operated to the backward travel, the control device 60 switches the forward and reverse travel switching unit 13 to the backward travel to cause the vehicle body 3 to travel backward.

The control device 60 starts the prime mover 4 through a predetermined processing when an ignition switch 43b (prime mover operation member) is operated to ON, and stops the driving of the prime mover 4 when the ignition switch 43b is operated to OFF.

When a PTO switch 43c is operated during the driving of the prime mover 4, the control device 60 switches the position of the PTO clutch 15 to any of a neutral position, an ON position, and an OFF position to turn on and off the driving of the PTO shaft 16. When a PTO shift lever 43d is operated, the control device 60 changes the rotation speed of the PTO shaft 16 (referred to as PTO rotation speed) by switching the PTO shift gear built in the transmission 5.

When a shift change switch 43e is switched to an automatic shift, the control device 60 automatically switches any of the main transmission unit 5b and the auxiliary transmission unit 5c in accordance with the state of the tractor, and automatically changes the shift stage (shift level) of the transmission 5 to a predetermined shift stage (shift level). When the shift change switch 43e is switched to a manual shift, the control device 60 automatically switches any of the main transmission unit 5b and the auxiliary transmission unit 5c in accordance with the shift stage (shift level) set with a shift lever 43f to change the shift stage of the transmission 5.

When an accelerator lever 43g is operated, the control device 60 changes the vehicle speed (speed) of the vehicle body 3 by changing the rotation speed of the prime mover 4 (referred to as prime mover rotation speed) in accordance with the operation amount of the accelerator lever 43g.

When a hydraulic lever 43h (second instruction member, working device operation member) is operated in a lifting direction (to a lifting side) during the driving of the prime mover 4, the control device 60 controls the control valve 34 to extend the lift cylinder 8e and lift a rear end portion (an end portion on the implement 101b side) of the lift arm 8a. When the hydraulic lever 43h is operated in a lowering direction (to a lowering side) during the driving of the prime mover 4, the control device 60 controls the control valve 34 to contract the lift cylinder 8e and lower the rear end portion (the end portion on the implement 101b side) of the lift arm 8a. The hydraulic lever 43h is provided with a position sensor 43h4 for detecting a rotation position, and thus, an operation of the hydraulic lever 43h can be detected.

When a hydraulic lock lever 43i is operated to ON, the control device 60 brings the lift cylinder 8e into the disconnected state with the control valve 34, locks the driving of the lift cylinder 8e, and also locks the raising and lowering of the implement 101b. When the hydraulic lock lever 43i is operated to OFF, the control device 60 brings the lift cylinder 8e into the connected state with the control valve 34 and allows the raising and lowering of the implement 101b described above.

The control device 60 controls the communication device 45A to transmit the first signal when the ignition switch 43b is being operated to OFF (the prime mover 4 is being stopped) and a monitoring start switch 43j (first instruction member) is operated. During the stop of the prime mover 4, when an operation of the hydraulic lever 43h is detected by the position sensor 43h4, the control device 60 controls the communication device 45A to transmit the second signal.

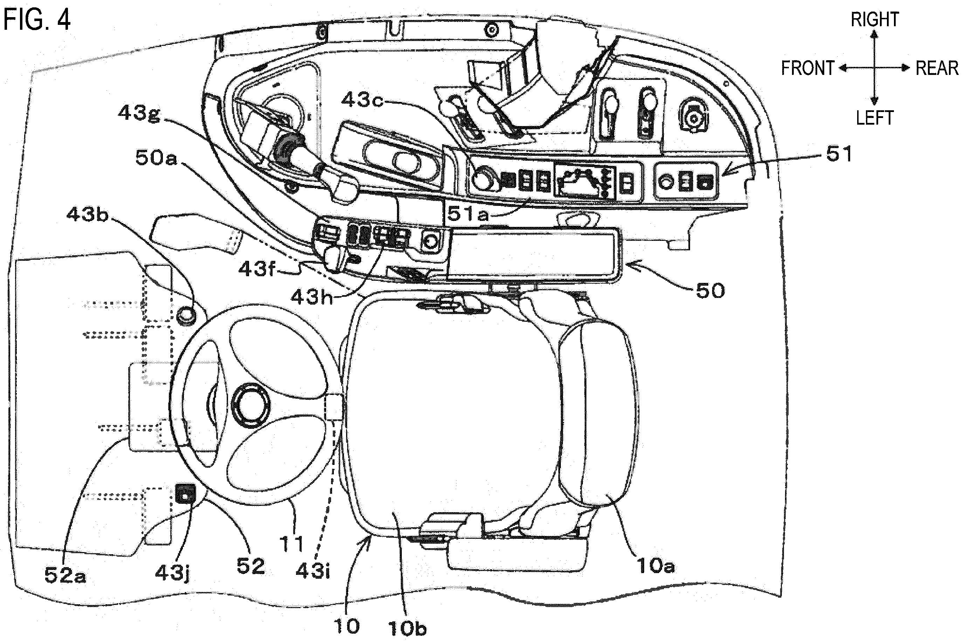

As shown in Fig. 4, an armrest 50 is provided on the right side of the driving seat 10 in a plan view. The armrest 50 is disposed such that a longitudinal direction thereof is oriented in the front-rear direction and a lateral direction thereof is oriented in the vehicle body width direction. A side console 51 is provided on the right side of the armrest 50 in the vehicle body width direction. A front end portion of the side console 51 is located in front of the driving seat 10, and a rear end portion of the side console 51 is located in rear of the driving seat 10. A front console 52 is provided in front of the driving seat 10 in a plan view. A rear end portion of the front console 52 is located in front of the driving seat 10. The above-described operation members are provided in the vicinity of the driving seat 10 such as on the armrest 50, on the side console 51, or on the front console 52 so that they can be operated by a driver. The arrangement of the main operation members will be described below.

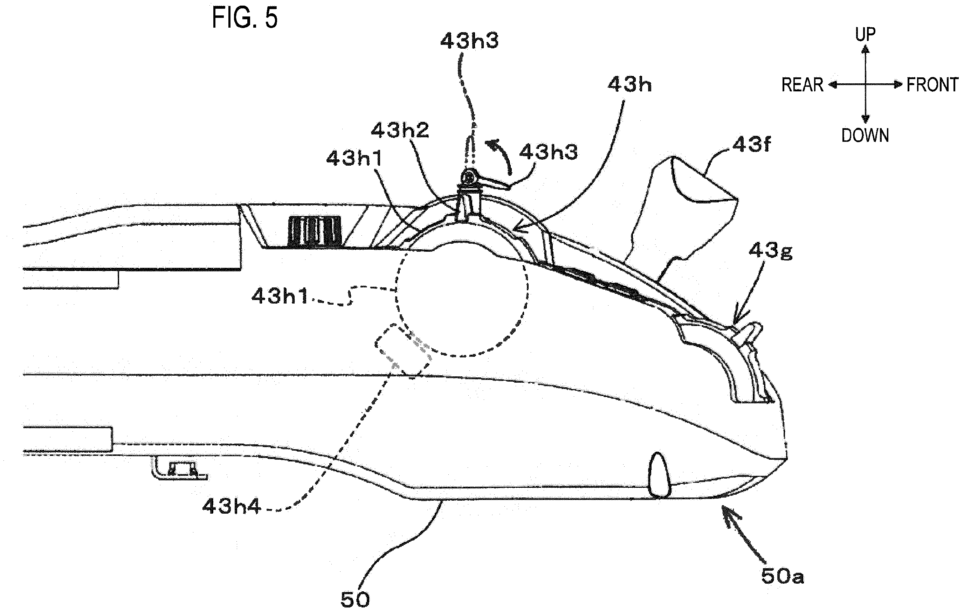

As shown in Figs. 4 and 5, a front portion 50a is provided on the front side in the longitudinal direction of the armrest 50. The front portion 50a is disposed in front of a back portion 10a of the driving seat 10 and overlaps a seat portion 10b in the front-rear direction. The accelerator lever 43g which is dialed in a rotary manner is provided at a foremost portion of the front portion 50a. The shift lever 43f is provided on the rear side of the accelerator lever 43g of the front portion 50a. The shift lever 43f is a swing operation type lever that includes a grip portion and a swing shaft and protrudes above the armrest 50. The hydraulic lever 43h is provided on the rear side of the shift lever 43f of the front portion 50a.

The hydraulic lever 43h includes a rotator 43h1, a knob portion 43h2, and a lock portion 43h3. The rotator 43h1 protrudes upward from the upper surface of the armrest 50 in a convex arc shape in a side view. The knob portion 43h2 protrudes from the upper surface of the rotator 43h1. The rotator 43h1 is attached to be capable of rotating around a lateral (horizontal) support shaft disposed inside the armrest 50. Inside the armrest 50, a position sensor 43h4 for detecting the rotation of the rotator 43h1 is provided.

When the knob portion 43h2 is gripped and moved forward or backward, the rotator 43h1 rotates around the support shaft. When the knob portion 43h2 is moved forward, the lift cylinder 8e of the lifting device 8 is shortened and the implement 101b is lowered. When the knob portion 43h2 is moved backward, the lift cylinder 8e of the lifting device 8 is extended and the implement 101b is raised.

The lock portion 43h3 is disposed on the vehicle body inner side (driving seat 10 side) of the knob portion 43h2, and is capable of swinging forward, backward, or upward with respect to a shaft portion. When the lock portion 43h3 is in a posture of being located forward or backward with respect to the shaft portion, the position of the knob portion 43h2 is fixed and the moving operation of the knob portion 43h2 is prevented. Fig. 5 shows a state in which the lock portion 43h3 is in a posture of being located forward (being tilted forward) with respect to the shaft portion. As indicated by an imaginary line (two-dot chain line) in Fig. 5, when the lock portion 43h3 is oriented upward (upright) with respect to the shaft portion, the fixation of the position of the knob portion 43h2 is released, and the moving operation of the knob portion 43h2 is allowed.

During the stop of the prime mover 4, when the rotator 43h1 is rotated by the moving operation of the knob portion 43h2, the rotation is detected by the position sensor 43h4, and a signal is transmitted to the in-vehicle communication network N1. The control device 60 receives the signal and recognizes that the hydraulic lever 43h has been operated.

As shown in Fig. 4, a central portion 51a is provided at a substantially central portion in the longitudinal direction of the side console 51. The central portion 51a is located in rear of the front portion 50a of the armrest 50. The central portion 51a is provided with the PTO switch 43c. The PTO switch 43c can be switched to three positions including a neutral position, an ON position, and an OFF position. By operating the PTO switch 43c to the neutral position, the ON position, and the OFF position, the position of the PTO clutch 15 is switched to the neutral position, the ON position, and the OFF position, respectively.

A column cover 52a is provided at a substantially central portion of the front console 52 in the vehicle body width direction. The steering wheel 11 is provided in a manner of being supported at an upper portion of the column cover 52a and facing the front of the driving seat 10. The ignition switch 43b and the monitoring start switch 43j are provided on the rear side of the front console 52 and respectively on the right side and the left side of the column cover 52a.

The ignition switch 43b is a push button that is operated by pressing. When the ignition switch 43b is pressed to ON in a state where the prime mover 4 is stopped, the prime mover 4 is started. When the ignition switch 43b is pressed to OFF in a state where the prime mover 4 is driven, the prime mover 4 is stopped. A signal indicating that the ignition switch 43b has been pressed to OFF is transmitted to the in-vehicle communication network N1, respectively. The control device 60 receives the signal and recognizes that the ignition switch 43b is being pressed to OFF.

The monitoring start switch 43j is a push button that is operated by pressing. A signal indicating that the monitoring start switch 43j has been pressed is transmitted to the in-vehicle communication network N1, respectively. The control device 60 receives the signal and recognizes that the monitoring start switch 43j has been pressed.

A hydraulic lock lever 43i is provided at a lower portion of the steering wheel 11 and in front of the seat portion 10b of the driving seat 10. The hydraulic lock lever 43i is a swing operation type lever that includes a grip portion and a swing shaft and protrudes to the front side of the seat portion 10b.

### <Monitoring device>

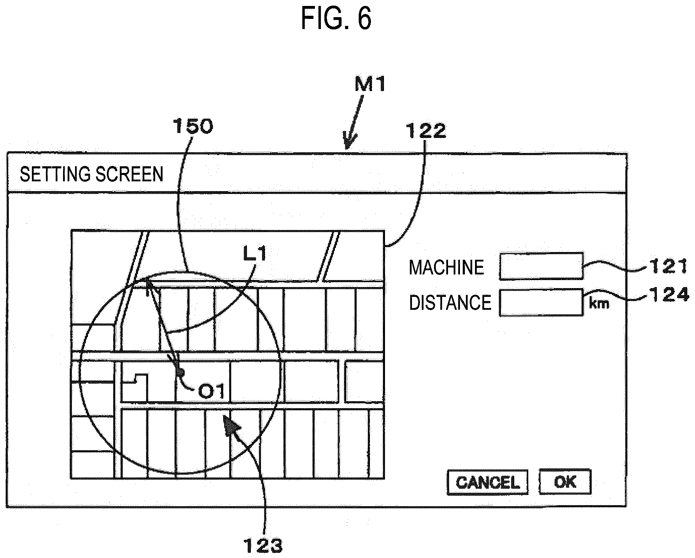

As shown in Fig. 1, the monitoring device (server) 100 includes an area setting unit 110A and an area storage device 111. The area setting unit 110A is constituted of an electric and electronic circuit provided in the monitoring device 100, a program stored in the monitoring device 100, and the like. The area storage device 111 is constituted of a nonvolatile memory and the like. The area setting unit 110A sets an area 150 of the work machine 101. Specifically, as shown in Fig. 1, when a stationary computer 105 different from the monitoring device 100 is connected to the monitoring device 100 and a predetermined operation is performed on the stationary computer 105, a setting screen M1 is displayed on a display unit 105A such as a monitor of the stationary computer 105 as shown in Fig. 6. In this embodiment, the computer 105 is a stationary, but the computer 105 may be a portable computer such as a smartphone, a tablet, or a notebook computer, etc.

The setting screen M1 includes a work machine input unit 121 for inputting the work machine 101, a map display unit 122 for displaying a map, a pointer 123 for selecting an arbitrary point on the map, and a distance input unit 124 for inputting a distance. The work machine input unit 121 can input identification information for identifying the work machine 101. As the identification information, various kinds of information such as a serial number, a name, a model number, a model, and a manufacturing number of the work machine 101 can be input. The map display unit 122 is a portion that displays a map including work places such as roads, agricultural roads, and fields, buildings, and the like. The map is displayed on the map display unit 122. The map may be, for example, a map acquired from a map providing company that provides map data or may be a map created by the stationary computer 105 or the like, and is not limited thereto.

In the setting screen M1, the area 150 can be set for the work machine 101 by inputting the work machine identification information, a center O1, and a distance L1. Although the center of the area 150 is selected by the pointer 123 in the above-described embodiment, a plurality of positions (points) on the map may be selected by the pointer 123. In this case, the area setting unit 110A sets an area surrounded by the plurality of positions (points) as the area 150.

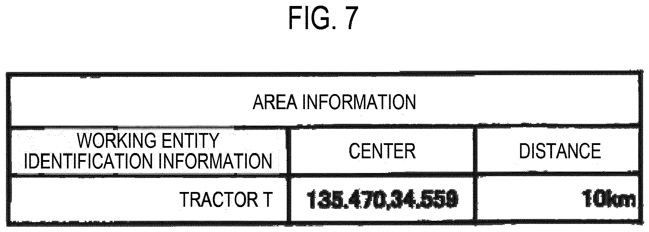

As shown in Fig. 7, the area information (work machine identification information, information indicating the area 150) set by the area setting unit 110A is stored in the area storage device 111. Note that the area information shown in Fig. 7 is an example and is not limited thereto.

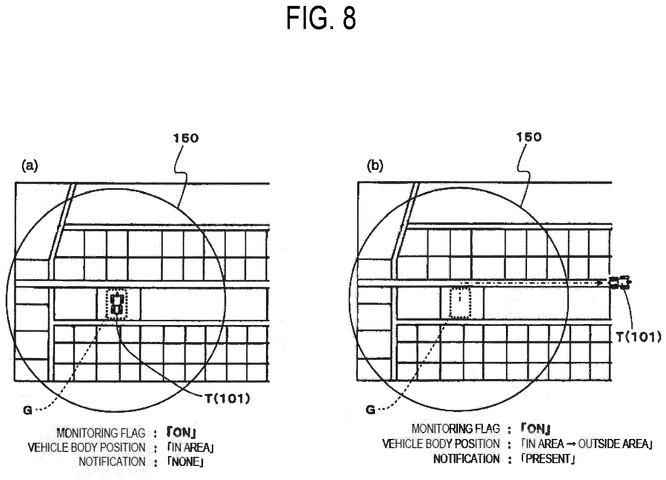

The monitoring device 100 includes a notification unit 112A. The notification unit 112A is configured of an electric and electronic circuit provided in the monitoring device 100, a program stored in the work support device 100, and the like. The notification unit 112A performs notification of the work machine 101 based on whether or not the work machine 101 is located within the area 150 determined for the work machine 101. As shown in Fig. 8(a), it is assumed that the area 150 is set for a tractor T. In the area 150, the center O1 and the distance L1 are set in a manner that a garage G is located at the center. When the monitoring device 100 receives the vehicle body position (the position of the tractor T) transmitted by the communication device 45A, the notification unit 112A determines whether or not the vehicle body position is within the area 150.

As shown in Fig. 8(a), in a case that the work machine 101 is being monitored, the notification unit 112A does not make a notification when the vehicle body position is within the area 150 (for example, at the position of the garage G). On the other hand, as shown in Fig. 8(b), in a case that the work machine 101 is being monitored, for example, the tractor T may be moved from the garage G and the position of the tractor T may deviate to the outside of the area 150. In this case, the notification unit 112A determines that the vehicle body position is outside the area 150, and notifies the stationary computer 105 or the like that "the tractor T has moved out of the area 150". That is, the notification unit 112A monitors the work machine 101 by notifying the stationary computer 105 or the like of whether or not the work machine 101 is in the area 150 determined corresponding to the work machine 101. When the work machine 101 is outside the area 150 for a long period of time, it can be determined that there is a possibility that the work machine 101 has been stolen, and the theft of the work machine 101 can be prevented by monitoring the work machine 101.

### <Start of monitoring and cancellation of monitoring>

In the work machine 101 described above, there is a case where the work machine 101 is intentionally located outside the area 150 instead of being stolen. For example, in a case where the area 150 is set to include the garage G of the work machine 101, there is a situation in which the work machine 101 in the stopped state is transported to a location which is far away from the garage G and outside the area 150. Specifically, there are a case where the work machine 101 is lent, a case where the work machine 101 is brought to a dealer, and the like.

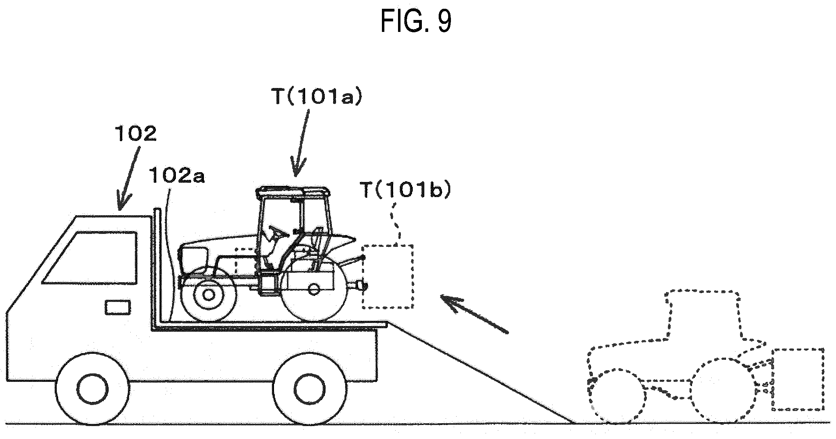

In this case, as shown in Fig. 9, for example, in the area 150, the tractor T (the work machine 101) is driven to move from the garage G and is loaded on a vehicle-loading table 102a of the parked truck 102 which can carry a vehicle. Thereafter, the prime mover 4 of the work machine 101 is stopped, and the truck 102 moves toward the destination. When the truck 102 deviates from the inside of the area 150 to the outside, the work machine 101 is also located outside the area 150 integrally with the truck 102. Here, when the work machine 101 is monitored, the above-described notification is executed even when the work machine 101 is not stolen. In this way, even when the work machine 101 is intentionally located outside the area 150 instead of being stolen, it is likely to be erroneously determined as being stolen. Therefore, there is a high possibility that the user may confuse it with the occurrence of theft, and there is also a high possibility that if the user gets used to the notification, the user may overlook the actual theft, lowering the security.

In view of the above, it is preferable that the monitoring of the work machine 101 can be arbitrarily started and canceled on the work machine 101 side. Therefore, in the present embodiment, the first signal and the second signal are transmitted from the communication device 45A of the work machine 101 to the monitoring device 100. The monitoring device 100 includes a monitoring start unit 112B and a monitoring cancellation unit 112C (see Fig. 1). A monitoring flag is switched between ON and OFF by the monitoring start unit 112B and the monitoring cancellation unit 112C, respectively. When the monitoring flag is ON, whether or not the work machine 101 is within the area 150 is monitored, and when the monitoring flag is OFF, whether or not the work machine 101 is within the area 150 is not monitored. That is, when the monitoring flag is changed from OFF to ON, monitoring of the work machine 101 is started. On the other hand, when the monitoring flag is changed from ON to OFF, monitoring of the work machine 101 is canceled.

The monitoring start unit 112B and the monitoring cancellation unit 112C are constituted of an electric and electronic circuit provided in the monitoring device 100, a program stored in the work support device 100, and the like. When the monitoring flag is in the OFF state and the first signal transmitted from the communication device 45A is received, the monitoring start unit 112B sets the monitoring flag to ON. When the monitoring flag is in the ON state and the second signal transmitted from the communication device 45A is received, the monitoring cancellation unit 112C sets the monitoring flag to OFF. In this way, when the first signal is received, the monitoring flag is set to ON, and the monitoring is started so that notification by the notification unit 112A is allowed. On the other hand, when the second signal is received, the monitoring flag is set to OFF, and the monitoring is canceled so that the notification by the notification unit 112A is restricted.

### <Actual operation>

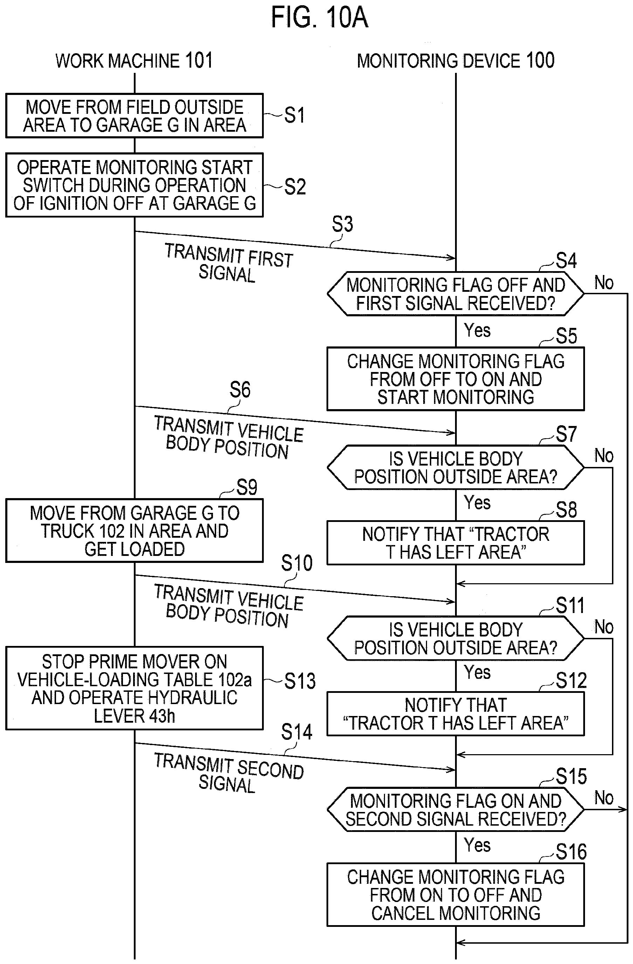

Fig. 10A is a flowchart showing a flow of monitoring start, monitoring cancellation, and notification by monitoring of the work machine 101, and also shows an operation flow of the work machine 101 and the monitoring device 100. It is assumed that the area 150 is set in advance for the work machine 101 by the area setting unit 110A. Similarly to Fig. 8, it is assumed that the garage G of the work machine 101 is included at the center in the area 150. It is also assumed that the monitoring flag is in the OFF state.

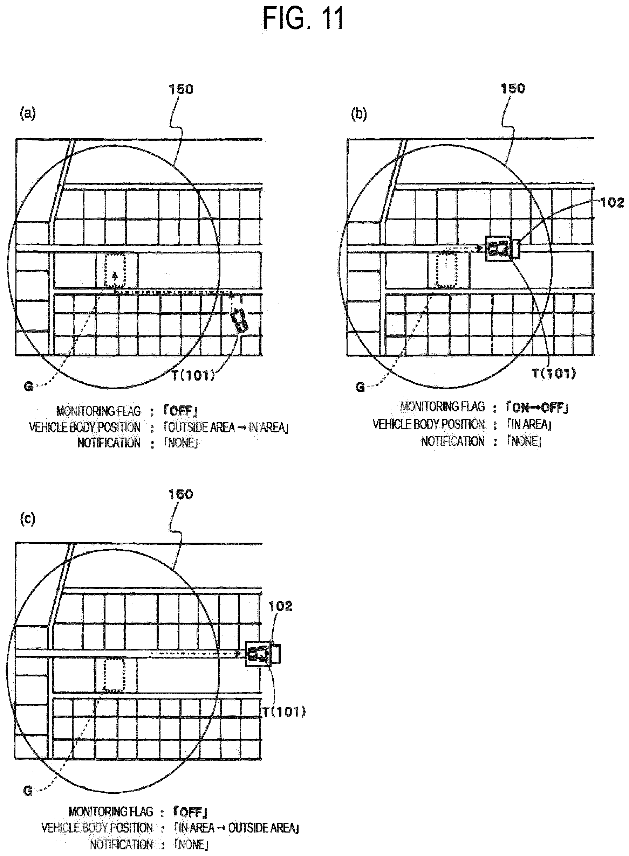

As shown in Fig. 11(a), the work machine 101 that has finished work in a field or the like outside the area 150 moves to the garage G in the area 150 by self-running (S1). In the garage G, the driver presses the ignition switch 43b to OFF in a state of sitting on the driving seat 10. The driver presses the monitoring start switch 43j while pressing the ignition switch 43b. The driver leaves the driving seat 10 and stores the work machine 101 in the garage G (S2). By this operation, the first signal is transmitted from the communication device 45A to the monitoring device 100 and is received by the monitoring device 100 (S3). The monitoring start unit 112B determines whether or not the first signal is received with the monitoring flag in the OFF state. At the present time, since the monitoring flag is OFF and the first signal is received, it is determined as "Yes" (S4). The monitoring start unit 112B changes the monitoring flag from OFF to ON and starts monitoring so that notification by the notification unit 112A is allowed (S5) (see Fig. 8(a)). When it is determined as "No" in S4 described above, the monitoring flag is maintained to be OFF, and notification by the notification unit 112A is restricted.

The vehicle body position detected by the positioning device 40A is transmitted from the communication device 45A to the monitoring device 100 and is received by the monitoring device 100 (S6). The notification unit 112A determines whether or not the received vehicle body position is outside the area 150. When the vehicle body position is outside the area 150, it is determined as "Yes" (S7) (see Fig. 8(b)) . The notification unit 112A notifies the stationary computer 105 that "the tractor T has left the area 150" (S8). As shown in Fig. 8(a), when normal storage is performed in the garage G, it is determined as "No" in S7 described above, and the notification is not performed.

Here, as shown in Fig. 11(b), when a situation occurs in which the work machine 101 is transported outside the area 150, the work machine 101 moves from the garage G to the parked truck 102 in the area 150 by self-running, and the work machine 101 is loaded on the vehicle-loading table 102a of the truck 102 (S9) (see Fig. 9). Similarly to S6 and S7 described above, transmission of the vehicle body position (S10) and determination of whether or not the vehicle body position is outside the area 150 (S11) are executed. In this case, since the work machine 101 and the truck 102 are located in the area 150, it is determined as "No" in S11 described above, and the notification is not performed. For example, when the work machine 101 deviates to the outside of the area at the time of being loaded on the truck 102, it is determined as "Yes" in S11 described above, and the notification is performed (S12).

A driver of the work machine 101 loaded on the vehicle-loading table 102a presses the ignition switch 43b to OFF to stop the prime mover 4 and rotates the rotator 43h1 of the hydraulic lever 43h in a state of sitting on the driving seat 10. Then, the driver leaves work machine 101 on the truck 102 and leaves the driving seat 10 (S13). By this operation, the second signal is transmitted from the communication device 45A to the monitoring device 100 and is received by the monitoring device 100 (S14). The monitoring cancellation unit 112C determines whether or not the second signal is received with the monitoring flag in the ON state. At the present time, since the monitoring flag is ON and the second signal is received, it is determined as "Yes" (S15). The monitoring cancellation unit 112C changes the monitoring flag from ON to OFF and cancels monitoring so that notification by the notification unit 112A is restricted (S16) .

As shown in Fig. 11(c), the truck 102 on which the work machine 101 is loaded moves from the inside of the area 150 to the outside. At this time, monitoring of the work machine 101 is canceled in S16 described above, and notification from the notification unit 112A is not executed. When it is determined as "No" in S15 described above, the monitoring flag is maintained to be ON, and notification by the notification unit 112A is allowed.

### [Second embodiment]

In the first embodiment, when the monitoring flag is ON and the operation of the hydraulic lever 43h is detected during the stop the prime mover 4, the second signal is transmitted from the communication device 45A to the monitoring device 100. Thus, the monitoring flag is set to OFF at the monitoring device 100, and the monitoring of the work machine 101 is canceled. The second embodiment is different from the first embodiment only in that the operation member used when transmitting the second signal is the hydraulic lock lever 43i (second instruction member, lock operation member). Hereinafter, differences of the second embodiment from the first embodiment will be described.

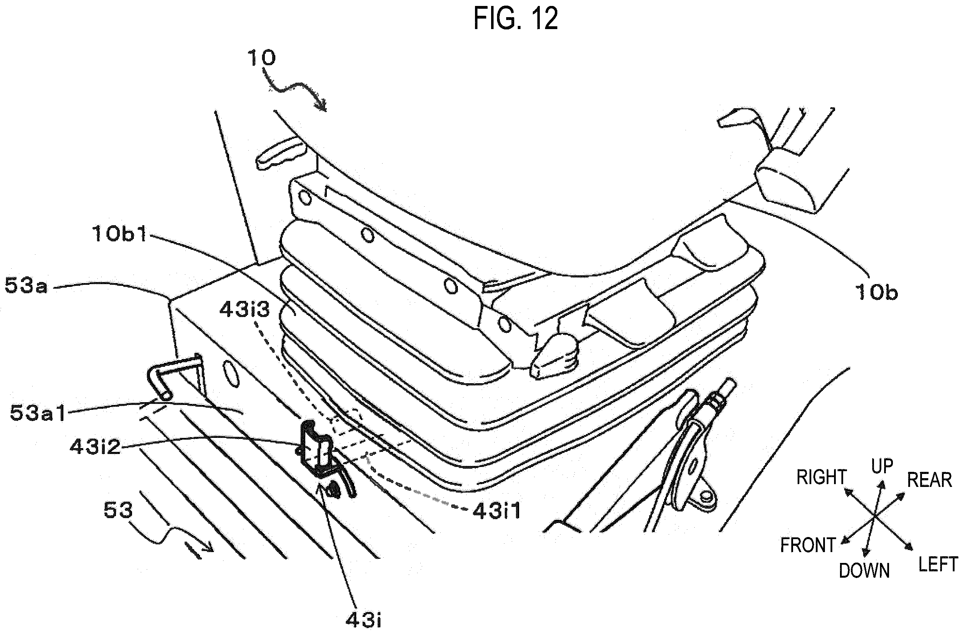

As shown in Fig. 12, the seat portion 10b of the driving seat 10 is supported from below by the supporting portion 10b1. A supporting portion 10b1 is configured such that a front-rear position of the seat portion 10b, a tilt position of the back portion 10a, and the like can be adjusted by a lever. A case 53a is interposed between a lower end of the supporting portion 10b1 and a floor 53. The case 53a is a housing having a substantially rectangular parallelepiped shape, and a front surface 53a1 facing a tip side of the seat portion 10b is defined. The front surface 53a1 stands substantially perpendicular to the floor 53. The hydraulic lock lever 43i is provided at a substantially central portion of the front surface 53a1 in the vehicle body width direction. The hydraulic lock lever 43i is located at a lower portion of the steering wheel 11 and in front of the seat portion 10b of the driving seat 10.

The hydraulic lock lever 43i has a swing shaft 43i1 and a grip portion 43i2. The swing shaft 43i1 protrudes forward from the front surface 53a1 of the case 53a. The grip portion 43i2 protrudes upward from a front end of the swing shaft 43i1. A rear portion of the swing shaft 43i1 is attached in a manner of being capable of swinging around a longitudinal (vertical) support shaft disposed inside the case 53a. That is, the hydraulic lock lever 43i is a swing operation type lever that protrudes to the front side of the seat portion 10b, and is capable of swinging in the vehicle body width direction. Inside the case 53a, a position sensor 43i3 for detecting the swing of the swing shaft 43i1 is provided instead of the position sensor 43h4 of the first embodiment.

When the grip portion 43i2 is gripped and moved rightward or leftward, the swing shaft 43i1 swings around the support shaft. When the grip portion 43i2 is moved rightward, the driving of the lift cylinder 8e is locked, and the raising and lowering of the implement 101b are also locked. That is, the hydraulic lock lever 43i is ON. When the grip portion 43i2 is moved leftward, the lift cylinder 8e is allowed to be driven and the implement 101b is also allowed to be raised and lowered. That is, the hydraulic lock lever 43i is OFF.

When the driver grips the grip portion 43i2 and moves the grip portion 43i2 rightward or leftward while being seated on the driving seat 10 during the stop of the prime mover 4, the swing of the swing shaft 43i1 is detected by the position sensor 43i3 and a signal is transmitted to the in-vehicle communication network N1. The control device 60 receives the signal and recognizes that the hydraulic lock lever 43i has been operated.

During the stop of the prime mover 4, when an operation of the hydraulic lock lever 43i is detected by the position sensor 43i3, the control device 60 according to the second embodiment controls the communication device 45A to transmit the second signal.

### [Third embodiment]

In the second embodiment, when the monitoring flag is ON and the operation of the hydraulic lock lever 43i is detected during the stop of the prime mover 4, the second signal is transmitted from the communication device 45A to the monitoring device 100. Thus, the monitoring flag is set to OFF at the monitoring device 100, and the monitoring of the work machine 101 is canceled. The third embodiment is different from the first and second embodiments only in that the operation member used when transmitting the second signal is the shift lever 43f (second instruction member, shift operation member). Hereinafter, differences of the third embodiment from the first and second embodiments will be described.

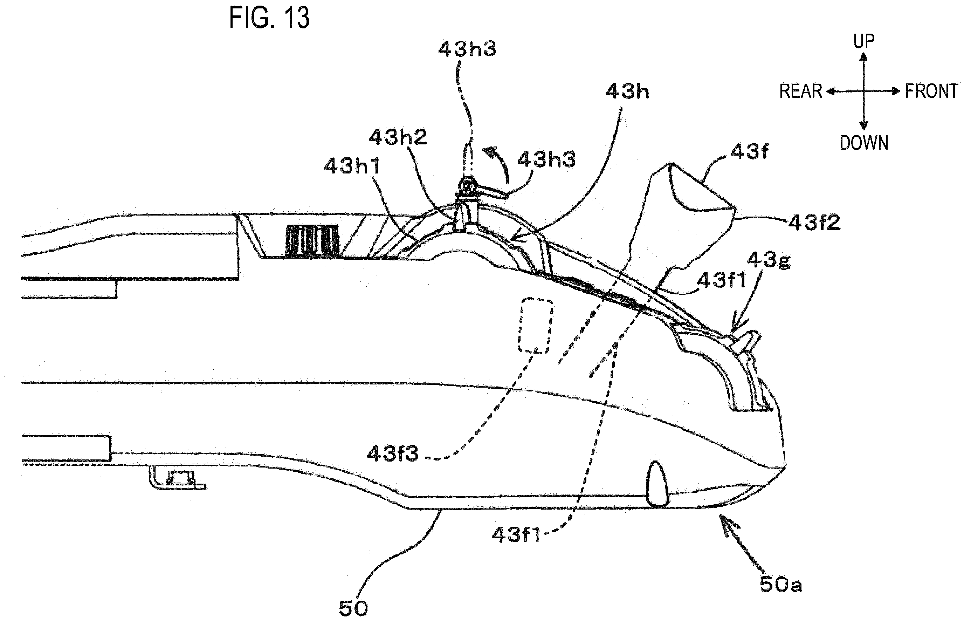

As shown in Fig. 13 corresponding to Fig. 5, the shift lever 43f has a swing shaft 43f1 and a grip portion 43f2. The swing shaft 43f1 protrudes upward from the upper surface of the armrest 50 in a side view. The grip portion 43f2 is provided at an upper end of the swing shaft 43f1. The swing shaft 43f1 is attached in a manner of being capable of swinging around a lateral (horizontal) support shaft disposed inside the armrest 50. Inside the armrest 50, a position sensor 43f3 for detecting the swing of the swing shaft 43f1 is provided instead of the position sensors 43h4, 43i3 of the first and second embodiments.

When the grip portion 43f2 is gripped and moved forward or backward, the swing shaft 43f1 swings around the support shaft. In a state in which the shift is switched to the manual shift, when the grip portion 43f2 is moved forward or backward, the shift stage of the transmission 5 is switched to a shift stage corresponding to the swing position.

When the driver grips the grip portion 43f2 and moves the grip portion 43f2 forward or backward while being seated on the driving seat 10 during the stop of the prime mover 4, the swing of the swing shaft 43f1 is detected by the position sensor 43f3 and a signal is transmitted to the in-vehicle communication network N1. The control device 60 receives the signal and recognizes that the shift lever 43f has been operated.

During the stop of the prime mover 4, when an operation of the shift lever 43f is detected by the position sensor 43f3, the control device 60 according to the third embodiment controls the communication device 45A to transmit the second signal.

### [Fourth embodiment]

In the third embodiment, when the monitoring flag is ON and the operation of the shift lever 43f is detected during the stop of the prime mover 4, the second signal is transmitted from the communication device 45A to the monitoring device 100. Thus, the monitoring flag is set to OFF at the monitoring device 100, and the monitoring of the work machine 101 is canceled. The fourth embodiment is different from the first, second and third embodiments only in that the operation member used when transmitting the second signal is the PTO switch 43c (second instruction member, PTO operation member). Hereinafter, differences of the fourth embodiment from the first, second, and third embodiments will be described.

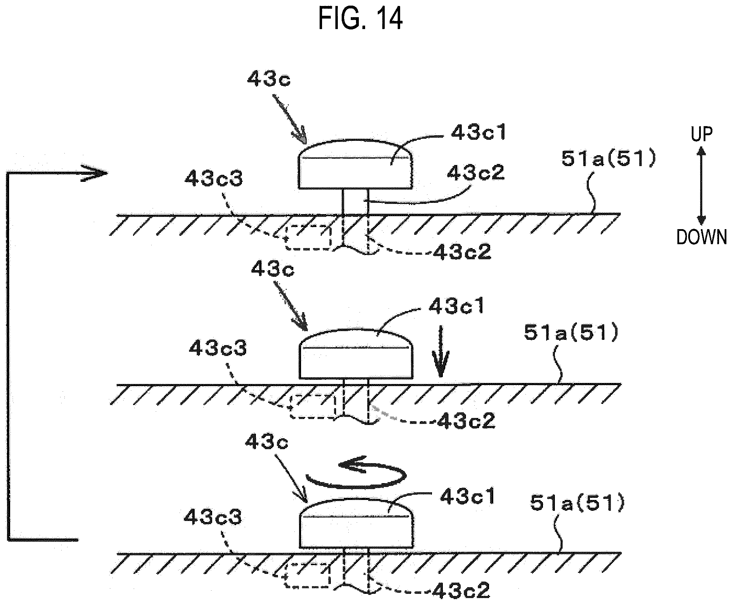

As shown in Fig. 14, the PTO switch 43c provided at the central portion 51a of the side console 51 has a rotating portion 43c1 and a supporting portion 43c2. The PTO switch 43c can be pushed down and rotated. The rotating portion 43c1 has a circular shape in a plan view and is rotatably supported by the supporting portion 43c2. The supporting portion 43c2 protrudes from the inside of the side console 51 to the outside, and one end portion of the supporting portion 43c2 is connected to the rotating portion 43c1 at the outside.

When the rotating portion 43c1 is at an upper position separated from the upper surface of the side console 51, the PTO switch 43c is at the neutral position. Accordingly, the PTO clutch 15 is in the neutral state. When the rotating portion 43c1 is pushed down from the neutral position and the rotating portion 43c1 reaches a lower position close to the upper surface of the side console 51, the PTO switch 43c is at the OFF position. Accordingly, the PTO clutch 15 is switched to the OFF state. When the rotating portion 43c1 is rotated from the OFF position to a predetermined position, the PTO switch 43c is at the ON position. Accordingly, the PTO clutch 15 is switched to the ON state. When the rotating portion 43c1 is released from the ON position, the rotating portion 43c1 automatically returns to the upper position via the lower position. That is, the PTO switch 43c is a momentary switch that automatically returns from the OFF position to the neutral position.

The supporting portion 43c2 is displaced between the upper position and the lower position integrally with the rotating portion 43c1. Inside the side console 51, a position sensor 43c3 for detecting the displacement of the supporting portion 43c2 is provided instead of the position sensors 43h4, 43i3, 43f3 of the first, second, and third embodiments.

When the driver grips the rotating portion 43c1 and pushes down the rotating portion 43c1 while being seated on the driving seat 10 during the stop of the prime mover 4, the displacement of the supporting portion 43c2 is detected by the position sensor 43c3 and a signal is transmitted to the in-vehicle communication network N1. The control device 60 receives the signal and recognizes that the PTO switch 43c has been operated.

During the stop of the prime mover 4, when an operation of the PTO switch 43c is detected by the position sensor 43c3, the control device 60 according to the fourth embodiment controls the communication device 45A to transmit the second signal.

### <Modification 1: transmission operation of first signal>

The first signal in each of the above embodiments is transmitted when the monitoring flag is OFF, the ignition switch 43b is being operated to OFF (the prime mover 4 is being stopped), and the monitoring start switch 43j is operated. Alternatively, for example, the control device 60 may control the communication device 45A to transmit the first signal when the monitoring flag is OFF, the prime mover 4 is stopped (the prime mover 4 is stopped after the OFF operation of the ignition switch 43b is completed), and the monitoring start switch 43j (first instruction member) is operated.

### <Modification 2: transmission operation of second signal>

The second signal in each of the above-described embodiments is transmitted when the hydraulic lever 43h (first embodiment), the hydraulic lock lever 43i (second embodiment), the shift lever 43f (third embodiment), or the PTO switch 43c (fourth embodiment) is operated with the monitoring flag being ON during the stop of the prime mover 4. Alternatively, for example, when one or two or more operation members selected from the hydraulic lever 43h, the hydraulic lock lever 43i, the shift lever 43f, and the PTO switch 43c are operated with the monitoring flag being ON during the stop of the prime mover 4, the control device 60 may control the communication device 45A to transmit the second signal. In this case, in order to detect the operation of each operation member, a plurality of corresponding position sensors are provided.

### <Summary>

The monitoring system of the work machine 101 includes the monitoring device 100 which monitors whether or not the work machine 101 is in the area 150 when the first signal is received and cancels monitoring when the second signal is received. The work machine 101 includes at least the communication device 45A that transmits the first signal and the second signal to the monitoring device 100, the first instruction member that is operated to instruct the communication device 45A to transmit the first signal, and the second instruction member that is operated to instruct the communication device 45A to transmit the second signal in a case where the monitoring device 100 is monitoring the work machine 101. According to this configuration, the first and second signals are transmitted from the work machine 101 by operating the first and second instruction members included in the work machine 101. Therefore, monitoring of the work machine 101 can be arbitrarily started and/or canceled on the work machine 101 side. For example, even when the work machine 101 is intentionally located outside the area 150 instead of being stolen, monitoring can be canceled in advance, and thus, it is possible to suppress erroneous determination of theft. In addition, even after cancellation of monitoring, monitoring can be started as necessary.

The work machine 101 further includes the prime mover 4. The communication device 45A outputs the first signal when the prime mover 4 is stopped and the monitoring start switch 43j (first instruction member) is operated. According to this configuration, monitoring of the work machine 101 can be appropriately and easily started in preparation for storage or the like in which a request for monitoring is high.

The work machine 101 further includes the prime mover 4 and the ignition switch 43b (prime mover operation member) for performing an operation of starting or stopping the prime mover 4. The communication device 45A outputs the first signal when the monitoring start switch 43j is operated during a stop operation by the ignition switch 43b. According to this configuration, monitoring of the work machine 101 can be appropriately and easily started in preparation for storage or the like in which a request for monitoring is high. In addition, in order to transmit the first signal, it is necessary to operate the first instruction member at a limited timing, that is, during the stop operation of the prime mover operation member. Therefore, it is possible to suppress erroneous transmission of the first signal.

The work machine 101 further includes the implement 101b that is driven by the prime mover 4 and the hydraulic lever 43h (working device operation member) that operates the implement 101b during the driving of the prime mover 4. When the hydraulic lever 43h is operated during the stop of the prime mover 4, the hydraulic lever 43h serves as the second instruction member and instructs the communication device 45A to transmit the second signal. According to this configuration, it is possible to utilize a working device operation member generally provided in an agricultural machine or the like, it is not necessary to newly provide an operation member dedicated to transmission of the second signal, and it is possible to perform an operation of transmitting the second signal in a state of sitting on the driving seat. For this reason, monitoring of the work machine 101 can be appropriately and easily canceled.

The work machine 101 further includes the implement 101b that is driven by the prime mover 4, the hydraulic lever 43h that operates the implement 101b during the driving of the prime mover 4, and the hydraulic lock lever 43i (lock operation member) that is operated so that the implement 101b is not operated by operating the hydraulic lever 43h. When the hydraulic lock lever 43i is operated during the stop of the prime mover 4, the hydraulic lock lever 43i serves as the second instruction member and instructs the communication device 45A to transmit the second signal. According to this configuration, it is possible to utilize a lock operation member generally provided in an agricultural machine or the like, it is not necessary to newly provide an operation member dedicated to transmission of the second signal, and it is possible to perform an operation of transmitting the second signal in a state of sitting on the driving seat. For this reason, monitoring of the work machine 101 can be appropriately and easily canceled. Particularly, in order to ensure safety, the lock operation member is often installed at a location (for example, a lower portion of the seat portion 10b or the like) which is independent from the installation locations of other operation members. Therefore, it is easy for the user to specify the operation location, and it is possible to reliably perform the operation of transmitting the second signal.

The work machine 101 further includes the traveling device 7 that is driven by the prime mover 4, and the shift lever 43f (shift operation member) for shifting the traveling device 7. When the shift lever 43f is operated during the stop of the prime mover 4, the shift lever 43f serves as the second instruction member and instructs the communication device 45A to transmit the second signal. According to this configuration, it is possible to utilize a shift operation member generally provided in an agricultural machine or the like, it is not necessary to newly provide an operation member dedicated to transmission of the second signal, and it is possible to perform an operation of transmitting the second signal in a state of sitting on the driving seat. For this reason, monitoring of the work machine 101 can be appropriately and easily canceled.

The work machine 101 further includes the implement 101b and the PTO switch 43c (PTO operation member) that changes the power to the PTO shaft 16 which transmits the power to the implement 101b. When the PTO switch 43c is operated during the stop of the prime mover 4, the PTO switch 43c serves as the second instruction member and instructs the communication device 45A to transmit the second signal. According to this configuration, it is possible to utilize a PTO operation member generally provided in an agricultural machine or the like, it is not necessary to newly provide an operation member dedicated to transmission of the second signal, and it is possible to perform an operation of transmitting the second signal in a state of sitting on the driving seat. For this reason, monitoring of the work machine 101 can be appropriately and easily canceled.

In each of the above-described embodiments, when the second instruction member is operated, the second signal is transmitted from the work machine 101 to the monitoring device 100, and when the monitoring device 100 receives the second signal, the monitoring is cancelled (notification is not performed even if the work machine 101 leaves the area 150), and instead of this, when the monitoring device 100 receives the second signal, the setting of the area 150 may be cancelled, that is, the area 150 may be deleted. That is, cancellation of monitoring includes not performing notification even if the work machine 101 moves out of the area 150 or deleting the setting itself of the area 150 in a situation where the area 150 is set.

Hereinafter, a case where deletion of the area 150 is executed as cancellation of monitoring of the work machine 101 will be described only with respect to points different from the above-described embodiments. In this case, the difference from the above-described embodiments is in the point that in the monitoring device 100, instead of switching the monitoring flag between ON and OFF, the area setting unit 110A sets and deletes the area 150 in response to the first signal and the second signal.

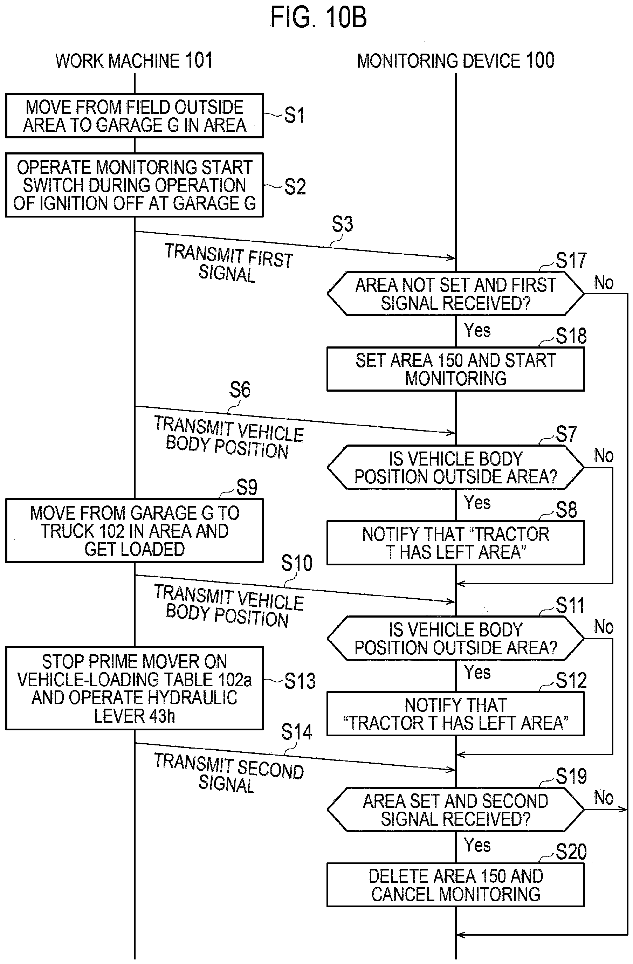

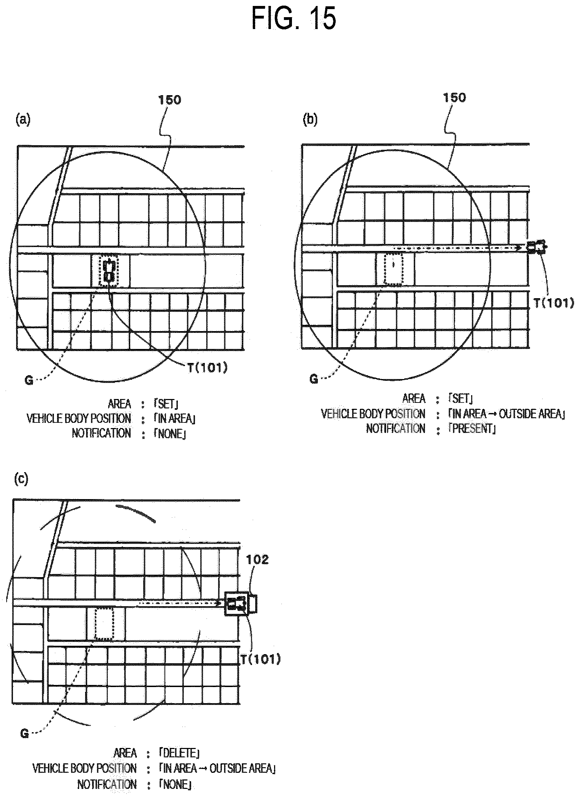

Fig. 10B is a flowchart showing a flow of start of monitoring, cancellation of monitoring, and notification due to monitoring of the work machine 101 by a work machine monitoring system which is different from that of Fig. 10A. Fig. 15 is a diagram showing a relation between the setting and deletion of the area 150. In Fig. 10B, the same steps as those shown in Fig. 10A are denoted by the same reference signs, and thus, description thereof will be omitted. Further, it is assumed that the area 150 is not set at the start.

In S17 corresponding to the S4 (see Fig. 10A), the area setting unit 110A determines whether the area 150 has not been set and the first signal has been received. In S18 corresponding to the S5 (see Fig. 10A), when it is determined as "Yes" in the S17, the area setting unit 110A sets the area 150, and monitoring of the work machine 101 is started. That is, notification by the notification unit 112A is allowed. When it is determined as "No" in the S17, the area 150 remains unset, and monitoring of the work machine 101 is not started.

When the area 150 is set by the area setting unit 110A, as shown in Fig. 15(a), in the case where the tractor T is located in the area 150, notification by the notification unit 112A is not performed. As shown in Fig. 15(b), when the tractor T moves from the inside of the area 150 to the outside, a notification by the notification unit 112A is made.

In S19 corresponding to the S15 (see Fig. 10A), the area setting unit 110A determines whether or not the area 150 has been set and the second signal has been received. In S20 corresponding to the S16 (see Fig. 10A), when it is determined as "Yes" in the S19, the area setting unit 110A deletes the area 150, and monitoring of the work machine 101 is canceled. That is, notification by the notification unit 112A is restricted. When it is determined as "No" in the S19, the area 150 remains set, and monitoring of the work machine 101 is not canceled.

When the area 150 is deleted by the area setting unit 110A, as shown in Fig. 15(c), for example, even in a case where the tractor T is loaded on the truck 102 and moves from the inside of the region corresponding to the originally set area 150 to the outside, since the area 150 itself does not exist, notification by the notification unit 112A is not performed.

As described above, in a case where the area 150 is deleted when the monitoring device 100 receives the second signal, the area 150 may be set again from the setting screen M1 of the computer 105 remotely from the work machine 101, or the area 150 may be set again by transmitting the first signal from the work machine 101 side.

It should be understood that the embodiments disclosed herein are illustrative in all respects and are not restrictive. The scope of the present invention is defined not by the above description but by the claims, and is intended to include all modifications within the meaning and scope equivalent to the claims.

### REFERENCE SIGNS LIST

- 4: Prime mover
- 7: Traveling device
- 16: PTO shaft
- 43b: Ignition switch
- 43c: PTO switch
- 43f: Shift lever
- 43h: Hydraulic lever
- 43i: Hydraulic lock lever
- 43j: Monitoring start switch
- 40: Positioning device
- 45A: Communication device
- 60: Control device
- 100: Monitoring device
- 101: Work machine
- 101a: Agricultural machine
- 101b: Implement
- 110A: Area setting unit
- 112A: Notification unit
- 112B: Monitoring start unit
- 112C: Monitoring cancellation unit
- 150: Area
- G: Garage
- N1: In-vehicle communication network
- T: Tractor

## Claims

1. A work machine monitoring system comprising a monitoring device that performs a monitoring on whether or not a work machine is within an area when a first signal is received and cancels the monitoring when a second signal is received, wherein
the work machine includes at least:
a communication device that transmits the first signal and the second signal to the monitoring device,
a first instruction member that is operated to instruct the communication device to transmit the first signal, and
a second instruction member that is operated to instruct the communication device to transmit the second signal when the monitoring device is monitoring the work machine.

2. The work machine monitoring system according to claim 1, wherein
the work machine further includes a prime mover, and
the communication device outputs the first signal when the first instruction member is operated during a stop of the prime mover.

3. The work machine monitoring system according to claim 1, wherein
the work machine further includes:
a prime mover, and
a prime mover operation member that performs an operation of starting or stopping the prime mover, and
the communication device outputs the first signal when the first instruction member is operated during the operation of stopping performed by the prime mover operation member.

4. The work machine monitoring system according to claim 2 or 3, wherein
the work machine further includes:
a working device driven by the prime mover, and
a working device operation member for operating the working device during a driving of the prime mover, and
the working device operation member, as the second instruction member, instructs the communication device to transmit the second signal when the working device operation member is operated during a stop of the prime mover.

5. The work machine monitoring system according to claim 2 or 3, wherein
the work machine further includes:
a working device driven by the prime mover,
a working device operation member for operating the working device during a driving of the prime mover, and
a lock operation member that is operated so that the working device is not operated by operating the working device operation member, and
the lock operation member, as the second instruction member, instructs the communication device to transmit the second signal when the lock operation member is operated during a stop of the prime mover.

6. The work machine monitoring system according to claim 2 or 3, wherein
the work machine further includes:
a traveling device driven by the prime mover, and
a shift operation member for shifting the traveling device, and
the shift operation member, as the second instruction member, instructs the communication device to transmit the second signal when the shift operation member is operated during a stop of the prime mover.

7. The work machine monitoring system according to claim 2 or 3, wherein
the work machine further includes:
a working device, and
a PTO operation member for changing a power to a PTO shaft which transmits the power to the working device, and
the PTO operation member, as the second instruction member, instructs the communication device to transmit the second signal when the PTO operation member is operated during a stop of the prime mover.
